# EUROPÄISCHE PATENTSCHRIFT

(11) **EP 2 406 337 B1**
(45) Veröffentlichungstag und Bekanntmachung des Hinweises auf die Patenterteilung: **16.01.2013**
(21) Anmeldenummer: 10703164.3
(22) Anmeldetag: 22.01.2010
(51) Int. Cl.: C09J 5/00, C09J 201/10, C09J 11/00

(54) **BEFESTIGUNGSMITTEL**
FASTENING MEANS
MOYEN DE FIXATION

(30) Priorität: 10.03.2009 DE 202009003176 U
(43) Veröffentlichungstag der Anmeldung: 18.01.2012
(73) Patentinhaber: GLABETE AG, 8750 Glarus (CH)
(72) Erfinder: RONNER, Christian, CH-8750 Glarus (CH)
(74) Vertreter: Ruckh, Rainer Gerhard
(86) Internationale Anmeldenummer: PCT/EP2010/000359
(87) Internationale Veröffentlichungsnummer: WO 2010/102691

(56) Entgegenhaltungen:
- GOTO H ET AL: "Moisture curing adhesive compsn. - contg. inorganic cpds. which release moisture at certain temp" 19890313, Bd. 1989, Nr. 16, 13. März 1989 (1989-03-13), XP002535598
- YANO T: "Moisture-content curing type adhesive agent for laminate, is obtained by mixing water absorption agent containing water and discharging water by heating, and adhesion base material capable of reacting with water" 20090316, Bd. 2006, Nr. 25, 16. März 2009 (2009-03-16), XP002535599
- DATABASE WPI Week 198209 Thomson Scientific, London, GB; AN 1982-16930E XP002588579 & JP 57 014674 A (SUN-STAR KAGAKU KOG) 25. Januar 1982 (1982-01-25)

## Beschreibung

Die Erfindung betrifft ein Befestigungsmittel.

Die Befestigungsmittel, auf welche sich die vorliegende Erfindung bezieht, sind von einkomponentigen Klebstoffen gebildet, die allgemein zum Fixieren zweier Gegenstände dienen, wobei der Klebstoff zwischen Grenzflächen der beiden Gegenstände eingebracht ist.

Derartige einkomponentige Klebstoffe sind insbesondere von Klebemitteln auf Polymerbasis gebildet. Ein generelles Problem derartiger Klebstoffe besteht darin, dass diese nicht oder nur äußerst unvollständig aushärten, wenn diese zwischen zwei diffusionsdichten Flächen eingebracht werden und so keinen ausreichenden Kontakt zur Umgebungsluft mehr haben.

Damit können bislang derartige einkomponentige Klebstoffe nur dann mit zufriedenstellenden Haftwirkungen eingesetzt werden, wenn wenigstens eine der Grenzflächen der Gegenstände, auf welche der Klebstoff aufgebracht wird, diffusionsoffen ist, so dass über diese ein Kontakt des Klebstoffs mit der Umgebungsluft gegeben ist.

Eine Anwendung derartiger aerober Klebstoffe zur Ausbildung eines Montagesystems ist aus der WO 03/03616 A1 bekannt.

Dieses Montagesystem dient zur ortsfesten Anbringung von Gegenständen, wie Handtuchhaltem, Regalen, Leuchten oder dergleichen Ausstattungsartikel an einer Wand, Decke oder dergleichen Fläche, insbesondere in mit Kacheln, Marmorplatten oder mit dergleichen Wandverkleidungen ausgestatteten Räumen. Das Montagesystem besteht aus verschiedenartigen Befestigungselementen und einem Haft- und Verbindungsmittel in Form eines aeroben Klebstoffs.

Das Befestigungselement dient zur Aufnahme eines Elements zur Halterung des Gegenstands und weist einen Grundkörper auf, der an seiner zur Wand zeigenden Rückseite eine Ausnehmung und eine in letztere einmündende Einfüllöffnung besitzt, über welche der aerobe Klebstoff zwischen das Befestigungselement und der Wand eingebracht wird.

Das Befestigungselement weist für das Entweichen der von dem in die Ausnehmung eingebrachten Klebstoff verdrängten Luft wenigstens eine flüssigkeits- und gasdurchlässige Öffnung auf, die von der Ausnehmung bis in eine weitere Oberfläche des Befestigungselements reicht und den überschüssigen Klebstoff aufnimmt.

Die der Wand zugewandte Rückseite des Grundkörpers ist wenigstens in Teilbereichen derart flüssigkeits- und gasdurchlässig, so dass das beim Aushärten des in der Ausnehmung befindlichen Klebstoffs entstehende Gas entweichen beziehungsweise flüchtende Bindemittel ausdunsten kann und zugleich Umgebungsluft an den Klebstoff gelangt, wodurch dieser aushärten kann und so für eine stabile und belastbare Fixierung des Befestigungsmittels an der Wand sorgt.

Nachteilig hierbei ist jedoch, dass die Ausbildung des Grundkörpers einen nicht unerheblichen konstruktiven Zusatzaufwand mit sich bringt und insbesondere auch die freie Gestaltung des Befestigungsmittels beeinträchtigt.

In Goto H et al.: "Moisture curing adhesive compsn. - contg. Inorganic cpds. Which release moisture at certain temp" 19890313, Bd. 1989, Nr. 16, 13. März 1989 (1989-03-13), XP002535598 ist ein Befestigungsmittel zur Fixierung zweier Gegenstände beschrieben, welches einen einkomponentigen aeroben Klebstoff aufweist, welchem dosiert Feuchtigkeit zuführbar ist, bevor mit diesem die Gegenstände fixiert sind, so dass der mit Feuchtigkeit versetzte Klebstoff bei aneinander geklebten Gegenständen aushärten kann. Das Klebemittel ist auf Polymerbasis (Polyurethan oder Silicone), der Feuchtespeicher ist ein Speichergranulat wie z. B. MgCO₃, 2H₂O.

In Yano T.: "Moisture-content curing type adhesive agent for laminate, is obtained by mixing water absorption agent containing water and discharging water by heating, and adhesion base material capable of reacting with water" 20090316, Bd. 2006, Nr. 25, 16. März 2009 (2009-03-16), XP002535599 ist ein einkomponentiger Klebstoff auf Polymerbasis beschrieben, welchem dosiert Feuchtigkeit zugeführt werden kann, wobei als Feuchtespeicher ein Speichergranulat vorgesehen ist.

In Database WPI Week 198209 Thomson Scientific, London, GB; AN 1982-16930 E & JP 57 014674 A (Sun-Star Kagaku Kog) 25. Januar 1982 (1982-01-25) ist ein einkomponentiger Klebstoff auf Polymerbasis beschrieben. Als Feuchtespeicher ist ein Wasser enthaltender Vernetzungsbeschleuniger vorgesehen.

Der Erfindung liegt die Aufgabe zugrunde, eine stabile, flexibel einsetzbare Befestigung für zwei Gegenstände bereitzustellen, ohne dass hierbei konstruktive Eingriffe in die Gegenstände selbst erforderlich sind.

Zur Lösung dieser Aufgabe sind die Merkmale des Anspruchs 1 vorgesehen. Vorteilhafte Ausführungsformen und zweckmäßige Weiterbildungen sind in den Unteransprüchen beschrieben.

Das erfindungsgemäße Befestigungsmittel dient zur Fixierung zweier Gegenstände, und umfasst einen einkomponentigen aeroben Klebstoff, welchem dosiert Feuchtigkeit zuführbar ist, bevor mit diesem die Gegenstände fixiert sind. Der mit Feuchtigkeit versetzte Klebstoff kann bei aneinander geklebten Gegenständen aushärten.

Mit dem Begriff Befestigungsmittel ist dabei generell auch die Funktion des Klebstoffs als Dichtmittel mit umfasst.

Durch die dosierte Zugabe von Flüssigkeit, insbesondere Wasser zu dem Klebstoff, wird auf überraschend einfache Weise eine reproduzierbare, feste Verbindung zwischen den Gegenständen erhalten, da der Klebstoff durch die Flüssigkeitszugabe vollständig aushärten kann. Anstelle von Wasser kann dem Klebstoff auch eine hydrophile Flüssigkeit, insbesondere in Form einer Emulsion zugeführt werden.

Je nachdem, ob die Flüssigkeit dem gesamten Klebstoff oder nur Teilbereichen zugeführt wird, erfolgt dabei die mit der Flüssigkeitszugabe bewirkte Aushärtung im gesamten Volumen oder in Teilbereichen hiervon, insbesondere in Oberflächenbereichen.

Wesentlich bei dem erfindungsgemäßen Befestigungsmittel ist die wohl dosierte Zufuhr von Feuchtigkeit, das heißt Flüssigkeit wie insbesondere Wasser, bevor mit dem Klebstoff die Grundflächen zweier Gegenstände verbunden werden. Zuviel Feuchtigkeit würde die Klebewirkung des Klebstoffs zerstören, während zu wenig Feuchtigkeit zu einer unzureichenden Aushärtung des Klebstoffs führen würde.

Ein wesentlicher Vorteil der Erfindung besteht darin, dass durch die Feuchtigkeitszugabe der Klebstoff zwischen den Grenzflächen der Gegenstände unabhängig von Umgebungseinflüssen und unabhängig von der Ausbildung der Gegenstände reproduzierbar aushärten und so eine feste Verbindung zwischen den Gegenständen herstellen kann.

Insbesondere können mit dem erfindungsgemäßen Befestigungsmittel auch Gegenstände mit diffusionsdichten Grenzflächen verbunden werden, da durch die Feuchtigkeitszugabe der Klebstoff von innen heraus aushärten kann. Eine Feuchtigkeitszufuhr aus der Umgebung ist daher nicht notwendig.

Auch bei der Verbindung zweier Gegenstände, von welchen wenigstens einer eine diffusionsoffene Grenzfläche aufweist, bringt das erfindungsgemäße Befestigungsmittel erhebliche Vorteile.

In diesem Fall kann zwar Feuchtigkeit aus der Umgebungsluft über die diffusionsoffene Grenzfläche zum Klebstoff gelangen und so ein Aushärten bewirken. Je nach Umgebungsbedingungen, insbesondere Temperatur und Luftfeuchtigkeit, kann jedoch die Feuchtigkeit aus der Umgebung für ein Aushärten des Klebstoffs nicht ausreichend sein. Die dem Klebstoff direkt vor dem Klebevorgang zugeführte Feuchtigkeit gewährleistet jedoch ein reproduzierbares Aushärten. Zudem ist die Reaktionszeit, die der Klebstoff zum Aushärten benötigt, durch die erfindungsgemäße Zugabe von Feuchtigkeit verkürzt.

Durch die Volumenreaktion des Klebstoffs mit Feuchtigkeit bei dem erfindungsgemäßen Befestigungsmittel können mit diesem nicht nur, wie bei aus dem Stand der Technik bekannten Systemen, Klebungen mit dünnem Klebstoffauftrag durchgeführt werden. Vielmehr können dichte Klebeschichten realisiert werden. Damit können Gegenstände verschiedener Geometrien und Materialien aneinander befestigt werden, und zwar ohne Einsatz von Klebemitteln, allein durch Einbringen des Klebstoffs in Hohlräume, Zwischenräume, Hinterschnittbereiche und dergleichen.

Gemäß einer ersten Variante der Erfindung ist zur Feuchtigkeitszufuhr ein mit Flüssigkeit getränkter Spatel vorgesehen, wobei der Spatel bevorzugt aus Holz besteht.

Ein wesentlicher Vorteil hierbei besteht darin, dass ein solcher Holzspatel durch Ansaugen von Flüssigkeit, insbesondere Wasser, eine begrenzte, aber stets reproduzierbare Feuchtigkeitsmenge aufnehmen kann. Diese Feuchtigkeitsmenge stellt eine sehr gute Dosierung zur Feuchtigkeitszufuhr zum Klebstoff dar. Durch Umrühren des Klebstoffs mit dem Spatel kann somit auch von ungeübten Personen schnell und einfach dem Klebstoff Feuchtigkeit in einer geeigneten Dosierung zugeführt werden.

Gemäß einer zweiten Variante der Erfindung erfolgt eine dosierte Flüssigkeitszufuhr derart, dass der Klebstoff mit Flüssigkeit enthaltenden Kapseln versetzt ist, wobei durch mechanischen Kontakt die Kapseln aufbrechbar sind, so dass die dort enthaltene Flüssigkeit in Kontakt mit dem Klebstoff kommt.

Vorteilhaft sind die Kapseln durch Mittel zum Anrühren des Klebstoffs aufbrechbar.

Damit kann auch in diesem Fall die dosierte Flüssigkeitszufuhr auch von ungeübten Personen durchgeführt werden. Vorteilhaft hierbei ist zudem dass die Kapseln eine Bewehrung oder Armierung des Klebstoffs bilden, das heißt die Stabilität der Klebeschicht erhöhen.

Als einkomponentige aerobe Klebstoffe zur Ausbildung des erfindungsgemäßen Befestigungsmittels eignen sich insbesondere Klebemittel auf Polymerbasis, wobei besonders bevorzugt silane MS-Polymere verwendet werden. Alternativ können auch Klebemittel auf Basis von silan modifizierten Polymeren oder Hybrid-Polymeren eingesetzt werden.

Die Erfindung wird im Folgenden anhand der Zeichnungen erläutert. Es zeigen:
- Figur 1:: Verbindung zweier Gegenstände mit dem erfindungsgemäßen Befestigungsmittel, bestehend aus einem aeroben Klebstoff mit zudosierter Feuchtigkeit.
- Figur 2:: Vorrichtung zur Zugabe von Feuchtigkeit zu einem Klebstoff.
- Figur 3a:: Beispiel eines erfindungsgemäßen Befestigungsmittels in Form einer durch Zugabe von Feuchtigkeit komplett ausgehärteten Klebstoff-Schicht.
- Figur 3b:: Beispiel einer unvollständig ausgehärteten Klebstoff-Schicht gemäß dem Stand der Technik.

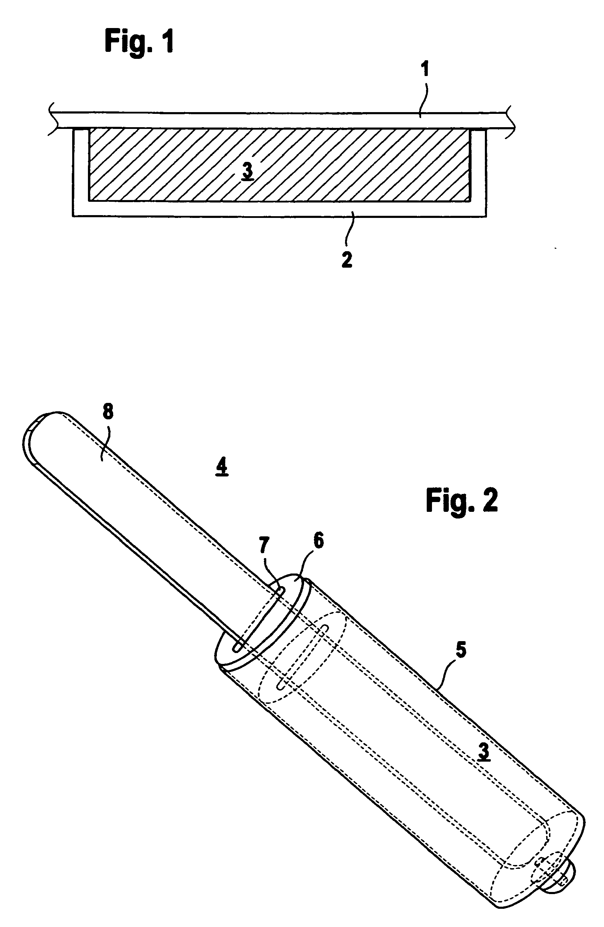

Figur 1 zeigt schematisch zwei Gegenstände 1, 2, die durch ein Befestigungsmittel in Form einer Schicht aus Klebstoffen 3 miteinander fest verbunden sind.

Die Gegenstände 1, 2 umschließen im vorliegenden Fall die Klebstoff-Schicht vollständig, wobei die Grenzflächen der Gegenstände 1, 2 zudem diffusionsdicht ausgebildet sind. Der erste Gegenstand 1 kann beispielsweise von einer Fliese einer Wand in einem Badezimmer oder dergleichen gebildet sein. Der zweite Gegenstand 2 kann von einem hohlzylindrischen Befestigungselement gebildet sein, welches mit dem Befestigungsmittel an der Fliese befestigt wird, um dann daran eine Armatur, einen Handtuchhalter oder einen sonstigen Ausstattungsartikel fixieren zu können.

Das erfindungsgemäße Befestigungsmittel besteht aus einem einkomponentigen aeroben Klebstoff 3, welchem dosiert Feuchtigkeit, im vorliegenden Fall Wasser, dosiert zugeführt wurde, bevor er in den Zwischenraum zwischen den Gegenständen 1, 2 eingeführt wird.

Der einkomponentige aerobe Klebstoff 3 ist im vorliegenden Fall aus einem Klebemittel aus silanen MS-Poylmeren gebildet. Alternativ kann der Klebstoff 3 auch aus anderen Klebemitteln auf Polymerbasis wie silan-modifizierten Polymeren oder Hybrid Polymeren bestehen.

Figur 2 zeigt ein Ausführungsbeispiel einer Vorrichtung 4 zum Zudosieren von Feuchtigkeit zu dem einkomponentigen aeroben Klebstoff 3. Die Vorrichtung 4 umfasst einen hohlzylindrischen Behälter 5, in welchem der Klebstoff 3 gelagert ist. Der Behälter 5 ist an seiner Unterseite durch einen Boden fest verschlossen. Die offene Oberseite des Behälters 5 ist mit einem Deckel 6 abgeschlossen, der in der Öffnung des Behälters 5 drehbar gelagert ist. In dem Deckel 6 ist ein Schlitz 7 vorgesehen. Durch den Schlitz 7 kann, wie aus Figur 2 ersichtlich, das Vorderende eines aus Holz bestehenden Spatels 8 in den Behälter 5 eingeführt werden, während das hintere Ende über den Behälter 5 auch außen hervorsteht.

Der Spatel 8 ist mit Wasser getränkt. Das dadurch im Spatel 8 enthaltene Wasser wird durch Drehen, Heben und Senken des Spatels 8 gleichförmig in dem im Behälter 5 angeordneten Klebstoff 3 verteilt. Damit ist dem Klebstoff 3 über sein gesamtes Volumen dosiert Feuchtigkeit zugeführt. Der Klebstoff 3 wird dann in den Zwischenraum zwischen die Gegenstände 1, 2 eingebracht.

Bei Herausziehen des Spatels 8 aus dem Behälter 5 wirkt der Deckel 6 mit dem Schlitz 7 als Abstreifer, um am Spatel 8 haftenden Klebstoff 3 abstreifen zu können. Schließlich kann die Vorrichtung 4 gemäß Figur 2 auch als Spritze verwendet werden, mittels derer der fertig gestellte Klebstoff 3 an Haftstellen angebracht werden kann.

Durch die im Klebstoff 3 enthaltene Feuchtigkeit kann dieser im Zwischenraum zwischen den Gegenständen 1, 2 liegend vollständig aushärten, obwohl die an den Klebstoff 3 anschließenden Grenzflächen der Gegenstände 1, 2 diffusionsdicht sind und somit keine Feuchtigkeitszufuhr von außen möglich ist.

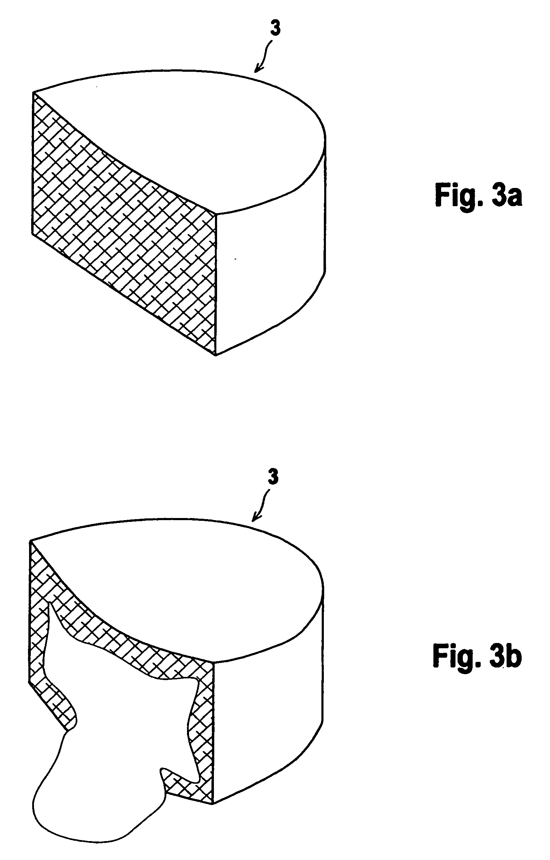

Figur 3a zeigt schematisch die im gesamten Volumen ausgehärtete Klebstoff-Schicht zwischen den Gegenständen 1, 2 in einer Schnittdarstellung. Im Vergleich hierzu zeigt Figur 3b eine nicht vollständig ausgehärtete Klebstoff-Schicht gemäß dem Stand der Technik, die aus einem einkomponentigen aeroben Klebstoff 3 besteht, welchem vor Einführen zwischen die Gegenstände 1,2 keine Feuchtigkeit zugeführt wurde. Hier erfolgte nur ein Aushärten der Randbereiche der Klebstoffe 3. Ein weiteres Aushärten wurde durch die Umkapselung der Klebstoffe 3 mit den Gegenständen 1, 2 verhindert.

Anstelle der Vorrichtung 4 gemäß Figur 2 kann der Klebstoff 3 mit Flüssigkeit enthaltenden Kapseln versetzt sein, wobei durch mechanischen Kontakt die Kapseln aufbrechbar sind, so dass die dort enthaltene Flüssigkeit in Kontakt mit dem Klebstoff 3 kommt.

Alternativ kann auch der Klebstoff 3 als Feuchtespeicher Speichergranulat enthalten sein.

Bei beiden Alternativen wird vorteilhaft das gesamte Volumen der Klebstoff-Schicht mit Feuchtigkeit durchsetzt.

Sollen nur Bereiche, insbesondere Oberflächenbereiche einer Klebstoff-Schicht mit Feuchtigkeit versetzt werden, so kann im einfachsten Fall ein nasser Schwamm als Dosiereinheit verwendet werden, mit dem nur im Oberflächenbereich der Klebstoff-Schicht Feuchtigkeit zudosiert wird.

### Bezugszeichenliste

- (1): Gegenstand
- (2): Gegenstand
- (3): Klebstoff
- (4): Vorrichtung
- (5): Behälter
- (6): Deckel
- (7): Schlitz
- (8): Spatel

## Patentansprüche

1. Befestigungsmittel zur Fixierung zweier Gegenstände (1, 2), umfassend einen einkomponentigen aeroben Klebstoff (3), welchem dosiert Feuchtigkeit zuführbar ist, bevor mit diesem die Gegenstände (1, 2) fixiert sind, so dass der mit Feuchtigkeit versetzte Klebstoff (3) bei aneinander geklebten Gegenständen (1, 2) aushärten kann, **dadurch gekennzeichnet, dass** zur Feuchtigkeitszufuhr ein mit Flüssigkeit getränkter Spatel (8) vorgesehen ist, oder dass der Klebstoff (3) mit Flüssigkeit enthaltenden Kapseln versetzt ist, wobei durch mechanischen Kontakt die Kapseln aufbrechbar sind, so dass die dort enthaltene Flüssigkeit in Kontakt mit dem Klebstoff (3) kommt.

2. Befestigungsmittel nach Anspruch 1, **dadurch gekennzeichnet, dass** die Grenzflächen der Gegenstände (1, 2), die mit dem Klebstoff (3) verbunden sind, diffusionsdicht sind.

3. Befestigungsmittel nach Anspruch 2, **dadurch gekennzeichnet, dass** das gesamte Volumen des Klebstoffs (3) mit Feuchtigkeit versetzt ist.

4. Befestigungsmittel nach Anspruch 2, **dadurch gekennzeichnet, dass** Volumen- und/oder Oberflächenbereiche des Klebstoffs (3) mit Feuchtigkeit versetzt sind.

5. Befestigungsmittel nach einem der Ansprüche 1 bis 4, **dadurch gekennzeichnet, dass** der Spatel (8) aus Holz besteht.

6. Befestigungsmittel nach einem der Ansprüche 1 bis 5, **dadurch gekennzeichnet, dass** die Kapseln durch Mittel zum Anrühren des Klebstoffs (3) aufbrechbar sind.

7. Befestigungsmittel nach einem der Ansprüche 1 bis 6, **dadurch gekennzeichnet, dass** die Kapseln eine Bewehrung oder Armierung des Klebstoffs (3) bilden.

8. Befestigungsmittel nach einem der Ansprüche 1 bis 7, **dadurch gekennzeichnet, dass** der einkomponentige aerobe Klebstoff (3) ein Klebemittel auf Polymerbasis ist.

9. Befestigungsmittel nach Anspruch 8, **dadurch gekennzeichnet, dass** der einkomponentige aerobe Klebstoff (3) von einem Klebemittel aus silanen MS-Polymeren oder von einem Klebemittel auf Basis von silanmodifzierten Polymeren gebildet ist.

10. Befestigungsmittel nach einem der Ansprüche 1 bis 9, **dadurch gekennzeichnet, dass** die dem einkomponentigen aeroben Klebstoff (3) zugeführte Feuchtigkeit von Wasser gebildet ist.

11. Befestigungsmittel nach einem der Ansprüche 1 bis 10, **dadurch gekennzeichnet, dass** die dem einkomponentigen aeroben Klebstoff (3) zugeführte Feuchtigkeit von einer hydrophilen Flüssigkeit gebildet ist.

## Claims

1. Fastening means for fixing two articles (1, 2), comprising a single-component aerobic adhesive (3) to which metered moisture can be added before the articles (1, 2) are fixed by this, so that the adhesive (3) mixed with moisture can harden with articles (1, 2) adhering to one another, **characterised in that** a spatula (8) saturated with liquid is provided for the addition of moisture or that the adhesive (3) is mixed with capsules containing liquid, wherein the capsules can be broken open by mechanical contact so that the liquid contained there comes into contact with the adhesive (3).

2. Fastening means according to claim 1, **characterised in that** the boundary surfaces of the articles (1, 2), which are connected by the adhesive (3), are diffusion-tight.

3. Fastening means according to claim 2, **characterised in that** the entire volume of the adhesive (3) is mixed with moisture.

4. Fastening means according to claim 2, **characterised in that** volume regions and/or surface regions of the adhesive (3) are mixed with moisture.

5. Fastening means according to any one of claims 1 to 4, **characterised in that** the spatula (8) consists of wood.

6. Fastening means according to any one of claims 1 to 5, **characterised in that** the capsules can be broken open by means for stirring the adhesive (3).

7. Fastening means according to any one of claims 1 to 6, **characterised in that** the capsules form a sheathing or armouring of the adhesive (3).

8. Fastening means according to any one of claims 1 to 7, **characterised in that** the single-component aerobic adhesive (3) is a gluing agent on a polymer base.

9. Fastening means according to claim 8, **characterised in that** the single-component aerobic adhesive (3) is formed by a gluing agent of silane MS polymers or by a gluing agent on a base of silane-modified polymers.

10. Fastening means according to any one of claims 1 to 9, **characterised in that** the moisture added to the single-component aerobic adhesive (3) is formed by water.

11. Fastening means according to any one of claims 1 to 10, **characterised in that** the moisture added to the single-component aerobic adhesive (3) is formed by a hydrophilic liquid.

## Revendications

1. Moyen de fixation pour la fixation de deux objets (1, 2), comprenant un produit adhésif aérobie (3) à un composant auquel de l'humidité peut être apportée de façon dosée avant que les objets (1, 2) soient fixés avec ce produit, de sorte que le produit adhésif humidifié (3) peut durcir lorsque les objets (1, 2) sont collés l'un à l'autre, **caractérisé en ce qu'**une spatule (8) imprégnée de liquide est prévue pour l'apport d'humidité, ou **en ce que** le produit adhésif (3) est mélangé à des capsules contenant un liquide, sachant que les capsules peuvent être ouvertes en étant brisées par contact mécanique, de sorte que le liquide qui y est contenu entre en contact avec le produit adhésif (3).

2. Moyen de fixation selon la revendication 1, **caractérisé en ce que** les surfaces limites des objets (1, 2) qui sont assemblés par le produit adhésif (3) sont imperméables à la diffusion.

3. Moyen de fixation selon la revendication 2, **caractérisé en ce que** la totalité du volume du produit adhésif (3) est humidifiée.

4. Moyen de fixation selon la revendication 2, **caractérisé en ce que** des régions du volume et/ou de la surface du produit adhésif (3) sont humidifiées.

5. Moyen de fixation selon l'une des revendications 1 à 4, **caractérisé en ce que** la spatule (8) est en bois.

6. Moyen de fixation selon l'une des revendications 1 à 5, **caractérisé en ce que** les capsules peuvent être brisées par des moyens destinés à agiter le produit adhésif (3).

7. Moyen de fixation selon l'une des revendications 1 à 6, **caractérisé en ce que** les capsules forment un blindage ou renforcement du produit adhésif (3).

8. Moyen de fixation selon l'une des revendications 1 à 7, **caractérisé en ce que** le produit adhésif aérobie (3) à un composant est une colle à base polymère.

9. Moyen de fixation selon la revendication 8, **caractérisé en ce que** le produit adhésif aérobie (3) à un composant est formé par une colle constituée de MS polymères silane ou par une colle à base de polymères modifiés silane.

10. Moyen de fixation selon l'une des revendications 1 à 9, **caractérisé en ce que** l'humidité apportée au produit adhésif aérobie (3) à un composant est formée par de l'eau.

11. Moyen de fixation selon l'une des revendications 1 à 10, **caractérisé en ce que** l'humidité apportée au produit adhésif aérobie (3) à un composant est formée par un liquide hydrophile.
